# EUROPEAN PATENT APPLICATION

(11) **EP 2 181 906 A1**
(43) Date of publication of application: **05.05.2010**
(21) Application number: 08168212.2
(22) Date of filing: 03.11.2008
(51) Int. Cl.: B60W 30/18

(54) **Energy regeneration system, method, and assembly**

(71) Applicant: Nederlandse Organisatie voor toegepast-natuurwetenschappelijk onderzoek TNO, 2628 VK Delft (NL)
(72) Inventor: Foster, Darren Leigh, 5622 CH Eindhoven (NL)
(74) Representative: Hatzmann, Martin

(57) **Abstract**

Energy regeneration system for a drive system, for example a drive system of a transport apparatus, comprising at least a first (E1) and a second (E2) energy regenerator, wherein each energy regenerator (E1, E2) is configured to convert kinetic energy associated with rotation of a driven axle (5) into potential energy, for example electrical or chemical energy, to decelerate the driven axle (5), wherein the system comprises a regenerator controller (1) configured to control operation of the at least first and second energy regenerator independently from each other.

The invention also provides an assembly comprising a drive system, for example to drive a transport apparatus, for example a vehicle, wherein the drive system is configured to drive a driven axle, wherein the assembly also includes an energy regeneration system

Besides, the invention provides a method for regenerating energy.

## Description

The invention relates to an energy regeneration system for a drive system, for example a drive system of an apparatus. The invention also relates to a method for regenerating energy, and an apparatus comprising the regeneration system.

For example, in known hybrid drive systems (for example hybrid vehicles or other hybrid apparatus), an energy regenerator can be applied to generate energy during retarding the vehicle (known as a 'regen mode'). More specifically, the energy regenerator can convert kinetic energy (relating to rotation of a driven axle and vehicle movement) into potential energy. Particularly, the regenerated energy can be used at a later stage, for example to be converted back into kinetic energy of axle rotation (and for example vehicle motion), for example to drive a respective apparatus (for example vehicle) in an e-mode (for example an electric drive-mode, in the case the apparatus is a hybrid vehicle comprising a hybrid drive system having at least an electric drive).

A problem of known energy regeneration systems is their relatively low efficiency over of a desired operating range. For example, it is known in hybrid drive systems to utilize a high voltage electric drive (which can drive a driven axle during an e-mode) as an energy regenerator (like an alternator) during a regen-mode (for example to decelerate the driven axle, and to drag an engine). During the start of the regen-phase (for example, when an initial rotation speed of the driven axle is high), the load factor of the electric energy regenerator will be high, resulting in a high energy regeneration efficiency. However, as the driven axle decelerates due to the energy regeneration action applied by the regenerator, the regenerator load factor will decrease, leading to a decrease of energy regeneration efficiency.

Besides, particularly, important factors for the effectiveness of a hybrid system are the amount of energy involved in 'edrive' and 'regen', along with the conversion efficiencies (see above). For example, for a fixed installed electrical power (IEP), efficiency is the only (i.e.: the most significant) parameter. Generally it is desired to provide a large IEP. To that aim, for example, known hybrid drive systems operate with relatively high electrical voltages (for example a system having batteries providing more than 100 Volt, and electric drives that can operate at peak voltages of over 100 Volt). However, a large IEP can lead to several disadvantages, including respective relatively high weight, bulkiness, and expensive components.

The present invention aims to solve the above-mentioned problems. Particularly, embodiments of the invention aim to provide a very efficient energy regeneration system and method. Also, particularly, embodiments of the invention aim to provide an improved assembly comprising a drive system and energy regeneration system.

According to an embodiment of the invention, the problem is solved by an energy regeneration system for a drive system, for example a drive system of a transport apparatus, comprising at least a first and a second energy regenerator, wherein each energy regenerator is configured to convert kinetic energy associated with rotation of a driven axle into potential energy, for example electrical or chemical energy, to decelerate the driven axle, wherein the system comprises a regenerator controller configured to control operation of the at least first and second energy regenerator independently from each other.

This energy regeneration system can provide a high efficiency during operation (i.e. significantly higher than the known systems). Also, therefore, application of the present energy regeneration system with a drive system, in a respective assembly, provides the advantages that the overall assembly can have a relatively low IEP, and can be made relatively lightweight, compact, durable and cheap compared to the known large IEP systems. Also, for example, the present energy regeneration system can advantageously be applied in a system operating with voltages below 100 V (particularly below 50 V, for example a 42V system), which is preferred instead of a high voltage system, to reduce costs, and due to safety and technological implications.

For example, according to a further embodiment, the regenerator controller can be configured to provide at least a first regeneration mode wherein the first and second regenerator are simultaneously activated, and a second regeneration mode wherein the first regenerator is deactivated and the second regenerator is activated. Particularly, when a regenerator is activated, it regenerates energy (particularly leading to deceleration of the driven axle). Also, particularly, when a regenerator has been deactivated, it does not regenerate energy. For example, when a regenerator has been activated, it is coupled (directly or indirectly) to the driven axle, whereas a deactivated regenerator has been decoupled from the driven axle.

Besides, according to an embodiment, the regenerator controller can be configured to provide at least a first regeneration mode (for example the above-mentioned first mode) wherein the first and second regenerator generate energy according to a first ratio, and a second regeneration mode (for example the above-mentioned second mode) wherein the first and second regenerator generate energy according to a second ratio, the first ratio being different from the second ratio. In one embodiment, said ratio's are fixed values, however, alternatively, the ratio's can be varied.

For example, during a mentioned first regeneration mode, all respective active regenerators (for example both regenerators) can have respective high loading factors. Also, during the second regeneration mode, each respective active regenerator (for example: only the second regenerator) can have a high loading factor. Thus, a very high energy regeneration efficiency can be achieved over an entire combined energy regeneration phase (the phase being the combination of subsequent energy regeneration periods associated with the at least first and second mode, respectively).

According to a preferred embodiment, the system is configured such that a loading ratio, which is the ratio of loading the first regenerator (in Watt) with respect to loading the second regenerator (in Watt), is set to minimise losses of one or both of the drive system and the regeneration system.

For example, according to an embodiment, the system is configured such that the loading ratio, being the ratio of loading the first regenerator (in Watt) with respect to loading the second regenerator (in Watt), during the first regeneration mode is equal to generator power rating ratio, being the ratio of a power rating (in Watt) of the first regenerator with respect to a power rating (in Watt) of the second regenerator.

For example, the above-mentioned power rating can be a maximum allowable power (Watt), associated with the respective regenerator (for example provided by a manufacturer of the regenerator; usually, the power rating is shown on the device and/or provided in a respective specification list, as will be appreciated by the skilled person). Alternatively, a different power level is used (e.g. for efficiency reasons). Also, in an embodiment, a power level 'specified' can be taken from a vehicle communication bus.

For example, good results can be obtained in the case that the first and second regenerator are equally loaded during the first regeneration mode, particularly in the case that the first and second regenerator have substantially the same power rating. However, according to an alternative embodiment, the first and second regenerator can be loaded mutually differently during the first regeneration mode, for example in the case that they have mutually different power ratings.

According to a further preferred embodiment, at least one of the energy regenerators, and preferably each energy regenerator, comprises an electromotor, configured to convert kinetic energy relating to rotation of the driven axle into electrical energy. For example, the or each electromotor can be configured to drive the driven axle during a non-regeneration mode of the system (edrive). Also, preferably, each electromotor can be configured to be powered by a voltage below 100 V, particularly about 50 V, during the non-regeneration mode of the system. Thus, a system having a low IEP can be provided, leading to various advantages (see above). Also, according to a further embodiment, in case the system comprises at least an engine and at least two electromotors, one of the electromotors can be configured as an engine starter. In that case, for example, the other electromotor can be configured to provide an edrive mode. Also, optionally, the electromotors can be operated to be active simultaneously to cooperate with the engine to start the engine.

According to an embodiment, the drive system can be a hybrid drive system that includes a first drive, for example an engine, and a second drive, for example an electromotor, to drive the driven axle. The system can also include a controllable coupling system to operatively couple one and/or both of the drives to the axle.

The present invention also provides an assembly that is characterised by the features of claim 9. The assembly can comprise a drive system, for example to drive a transport apparatus, for example a vehicle. Particularly, the drive system is configured to drive a driven axle. The assembly also includes a system according to the invention to generate potential energy from kinetic energy that is associated with rotation of the driven axle, particularly to decelerate the driven axle. For example, the potential energy can be electric energy, wherein the assembly can comprise at least one electric accumulator to store the electric energy, wherein the electric accumulator can be a battery having maximum battery terminal voltage of 100 V, preferably 50 V.

Also, an embodiment of the invention provides a method for regenerating energy, comprising:
- providing a driven axle, for example a driven axle of a transport apparatus;
- providing at least a first and a second regenerator, each regenerator being configured to cooperate with the driven axle to generate potential energy from kinetic energy, associated with rotation of the axle, to decelerate the driven axle; and
- controlling operation of the first and second regenerator independently from each other.

For example, the independent controlling of regenerator operation can include: controlling a coupling mechanism configured to engage and disengage at least one of the regenerators (for example the first regenerator) to/from the driven axle. The independent controlling of regenerator operation can also include: controlling one or more transmission systems, for example to change a regenerative loading of a/the regenerator(s).

According to a further embodiment, the method provides at least a first and second regeneration mode, wherein during the first regeneration mode the first regenerator generates a first amount of energy P1 and the second regenerator generates a second amount of energy P2, wherein during the second regeneration mode the first regenerator generates a third amount P3 of energy and the second regenerator generates a fourth amount of energy P4, wherein a ratio R1 between the first and second energy amounts differs from a ratio R2 between the third and fourth energy amounts.

As a non-limiting example, said third amount of energy P3 can be 0 (zero). Also, as a non-limiting example, said first and second energy amounts P1, P2 can be equal to each other.

Preferably, the sum of the first and second energy amount (P1+P2) at the end of the first regeneration mode (i.e. just before switching to the second mode) is substantially equal to the sum of the third and fourth energy amount (P3+P4) at the start of the second regeneration mode (i.e. just after having switched to the second mode).

According to further advantageous embodiments, the method can comprise: providing a drive system to drive the driven axle during a drive mode, wherein the generated potential energy is used during the drive mode to power at least part of the drive system. Also, according to further advantageous embodiments, one of the regenerators can be coupled to the driven axle during the drive mode, for example via a transmission, to drive the driving the axle.

Besides, preferably, each regenerator is an electromotor, preferably having a maximum electromotor power rating of 25 kW. Particularly, the power rating can be in the range of about 3-10 kW.

Good results are obtained in case the method includes:
- controlling a coupling mechanism (for example a clutch system) such that the first regenerator can cooperate with the driven axle to regenerate energy generate potential during a first regeneration mode;
- controlling a transmission system to provide a first amount of loading of the second regenerator during the first regeneration mode;
- controlling the coupling mechanism such that the first regenerator can not cooperate with the driven axle during a second regeneration mode; and
- controlling the transmission system to provide a second amount of loading of the second regenerator during the second regeneration mode, the second amount of loading being higher than the first amount of loading.

For example, an above-mentioned transmission system can be a gearbox, a continuous variable transmission system, or another type of transmission.

Further advantageous embodiments are described in the dependent claims. The invention will be further elucidated by means of exemplary embodiments with reference to the accompanying drawings in which:
Figure 1A schematically depicts an assembly according to a non-limiting embodiment of the invention;
Figure 1B shows a detail Q of Fig. 1A, according to a further embodiment;
Figures 1C-1F are similar to Fig. 1B, and each depict a respective alternative further embodiment;
Figure 2 schematically depicts an embodiment of a control system associated with the embodiment of Figures 1A-1F; and
Figure 3 shows a graph of driven axle rotation speed and regenerator power outputs versus time, during an energy regeneration phase of the embodiment of Fig. 1.

Equal or corresponding features are denoted by equal or corresponding reference signs in the present application.

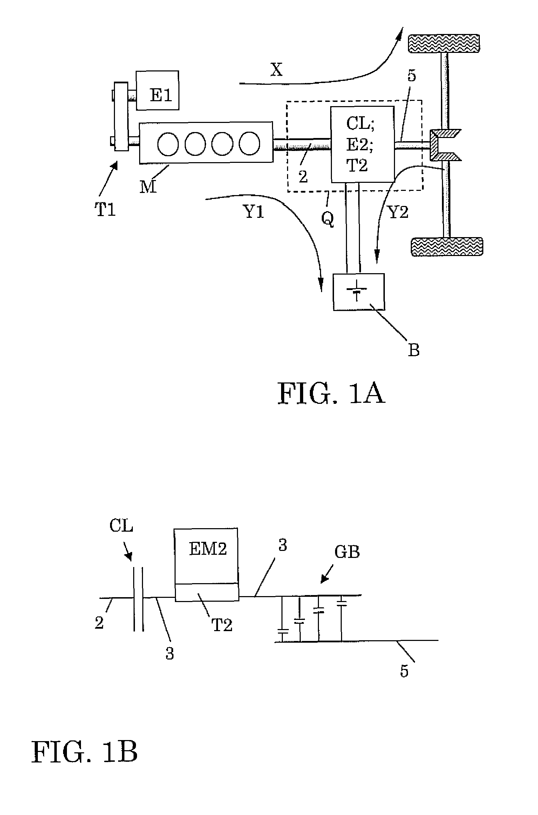

Figures 1A-1F schematically depict part of a drive system. In the following example, the drive system is described as being part of a hybrid apparatus, for example a hybrid vehicle. The configuration of hybrid vehicles as such is known to the skilled person and will therefore only be explained in general.

The present embodiment (see Fig. 1A) can comprise a hybrid powertrain including an engine M, a first electromotor E1 and a second electromotor E2. For example, the first electromotor E1 can be a starting motor, configured to cooperate with the engine during an engine starting mode (MSTART), for example via a respective first electromotor transmission system T1 that can couple an output shaft of the electromotor E1 to the engine (starting an engine using an electromotor-starter as such is commonly known to the skilled person, and will thus not be explained in more detail). The first transmission T1 can be configured in various ways, as will be appreciated by the skilled person.

For example, a cold start and fast start can be performed using (activating) the first electromotor E1. Therein, the second electromotor E2 can be used as backup, or the electromotors E1 and E2 can be combined to start-up the engine M. Also, an impulse start can be achieved via the second electromotor E2.

In the present embodiment, the engine M and second electromotor E2 can be coupled via an output shaft 5 to vehicle wheels to provide torque to the wheels independent of each other or at the same time. An arrow X indicates a flow of torque energy.

A coupling between the engine M and the output shaft 5 can be configured in many different ways, known as such to the skilled person. The same holds for a coupling between the second electromotor E2 and the output shaft 5.

Figures 1B-1F show several non-limiting examples of further embodiments. For example (see Fig. 1B), there can be provided a controllable clutch CL and a controllable main transmission system GB (for example a gearbox system GB) between an engine output shaft 2 and the driven shaft 5. The main transmission system GB can be configured in various ways, and is particularly a reduction transmission system configured to be (electronically) controlled to set/change a respective transmission ratio (i.e. determining the speed of a downstream driven axle 5 with respect of the speed of an input shaft 3). The clutch system CL can be configured in various ways, and is particularly configured to be (electronically) controlled to have at least the engine M engage and disengage the main transmission system's input shaft 3 (directly, or indirectly).

In the present example, particularly, the second electrodrive E2 is arranged between the clutch CL and the main transmission system GB (i.e., when the clutch has disengaged the engine M from the main transmission system GB, the second drive E2 can still be operatively coupled to an input of the transmission system GB).

The second electromotor drive E2 can be operatively coupled to a shaft, in this case a driven shaft 3 which connects a clutch output to the gearbox input, for example via a suitable controllable second electromotor transmission system T2. For example, the latter transmission system (which can for example comprise a respective controllable clutching and/or adjustable transmission system) T2 can be integrated with the respective drive E2, or it can be a separate there-from.

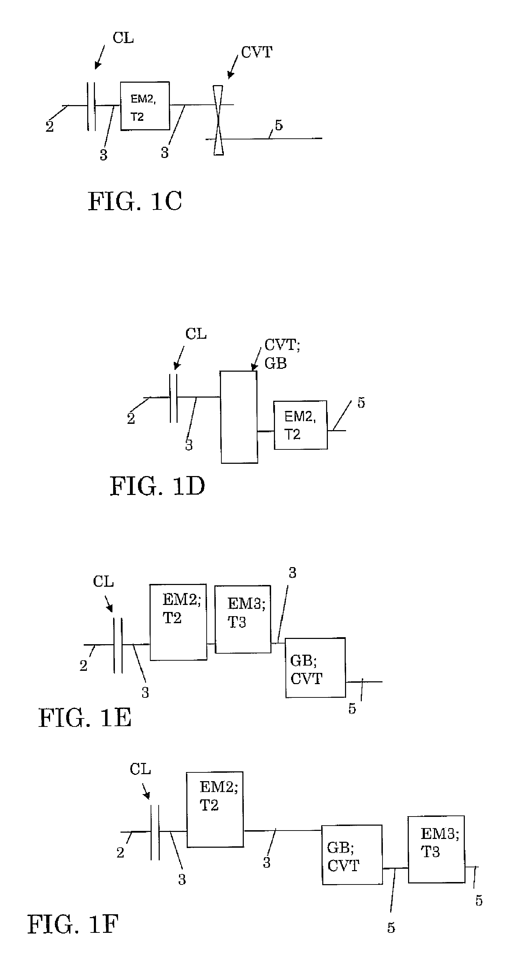

Figure 1C depicts an alternative example, which differs from the embodiment of Fig. 1B in that it comprises a continuous variable transmission CVT (known as such to the skilled person), instead of a gearbox system GB.

Figure 1D depicts yet another alternative example, which differs from the embodiments of Fig. 1B and 1C in that the second electromotor drive E2 is now located downstream with respect to the transmission system GB/CVT, and can be coupled to the output shaft 5 (for example by the respective second electromotor transmission system T2).

Figure 1E depicts another alternative example, which differs from the embodiments of Fig. 1B-1D in that a third electromotor drive E3 is provided. For example, the third electromotor drive E3 (which can be provided with a respective coupling system T3 to operatively couple the drive to a shaft) can be operatively coupled to the same shaft 3 as the second electromotor drive E2. For example, the third drive E3 can be controlled to drive the axle 5 simultaneously with the second drive E2. According to yet a further non-limiting embodiment, the second and third drives can E2, E3 can each have about the same configuration (having the same power rating). For example, the drives E2, E3 can be the same type of electromotor.

Yet another embodiment can include a configuration as shown in fig 1A, having a first drive E1, and in addition at least a second drive E2 on a rear axle of the vehicle, without mechanical connection between the drives E1, E2 (for example giving a 4WD configuration). For example, the different drives E1, E2 can be configured to drive different drive shafts (relating to different wheels) of a vehicle.

Figure 1F depicts an example, which differs from the embodiment of Fig. 1E in that the third electromotor drive E3 is arranged to be coupled to another shaft (in this case the output shaft 5) than the second electromotor drive E2.

The skilled person will appreciate that the system can also include more than the three electromotor drives E1, E2, E3 described here-above, and that the configuration of the drive system M, E1, E2 (,E3) can be different from the presently described examples.

As is further depicted in Fig. 1A, also, an energy storage system B can be provided to provide electric energy, for example to each of the electromotor E1-E3 and also for example to other system components. Fig. 1A schematically shows current lines extending between the energy storage system B and part of the system CL, E2, T2, for example to feed the second electromotor with electrical energy or to be charged by the second electromotor during a respective regeneration function. The skilled person will appreciate how current lines between the energy storage system B and other system components (for example other energy regenerators) can be configured. The energy storage system B can be configured in various ways, and may include one or more of: a battery, supercapacitors, an accumulator, a energy storage device having an electrical interface, and the-like.

Also, for example, at least the electromotor E2 (and preferably also the first electromotor E1 and to optional further electromotors E3) can be provided with a respective inverter to convert direct current into alternating current and vice-versa (particularly in the case the energy storage system B provides direct current, and in case the respective electromotor E2 is an AC motor).

Charging of the energy storage system B can be achieved in various ways. For example, the powertrain can be in a Charge state, wherein at least one of the electromotors E1-E3 functions as an electric generator and is driven by the engine (during engine operation) to charge the energy storage system B (a resulting energy path is indicated by an arrow Y1 in Fig. 1).

Besides, the vehicle can be configured to provide one or more Regenerative states ('Regen') to generate electric power for charging the energy storage system B. Usually, such regenerative states are available during a vehicle braking or vehicle deceleration process, for example in the case that the electromotor/generator E2 is driven by the wheels (a resulting energy path is indicated by an arrow Y2 in Fig. 1).

Besides, the hybrid powertrain can be of a serial hybrid type, a parallel hybrid type or a combination thereof. Preferably, the powertrain comprises at least one electromotor E2 that also functions as electric power generator, as in the Fig. 1A embodiment. Alternatively, an electromotor and separate electric generator can be included in the powertrain.

Also, the engine M can be an internal combustion engine, for example to combust gasoline, diesel, hydrogen and/or other fuels, or other types of engines. The skilled person will appreciate that the hybrid vehicle generally comprises various other components, for example a main transmission GB, CVT, one or more clutches CL to engage/disengage the engine M and first electromotor E1, converter, as well as sensors S to determine status of various components, for example to determine a state of charge (SOC) of the energy storage system B, to determine amounts of power provided or requested by the powertrain, to determine operator (driver) demands, and for providing information regarding other parameters, for example thermal variables relating to vehicle cabin temperature and/or exhaust catalyst system.

In an embodiment, the hybrid vehicle can be in various hybrid power states, relating to generation and consumption (use) of the electric power, for example:
- a Charging state, wherein electrical energy is being generated by driving the electric power generator E2 using the engine;
- a Boost state to increase engine M torque using the electromotor E2;
- a Regeneration state ('Regen') to generate electrical energy by driving an electric power generator (for example the electromotor E2) without using the engine M;
- an eDrive state wherein the torque is generated entirely by the electromotor E2 and not by the engine M.

Other hybrid power states can be available as well, for example a standby state wherein the powertrain is on standby (for example, when the vehicle stands still).

Particularly advantageous Regen states, including at least a first and second regeneration mode, will be described below.

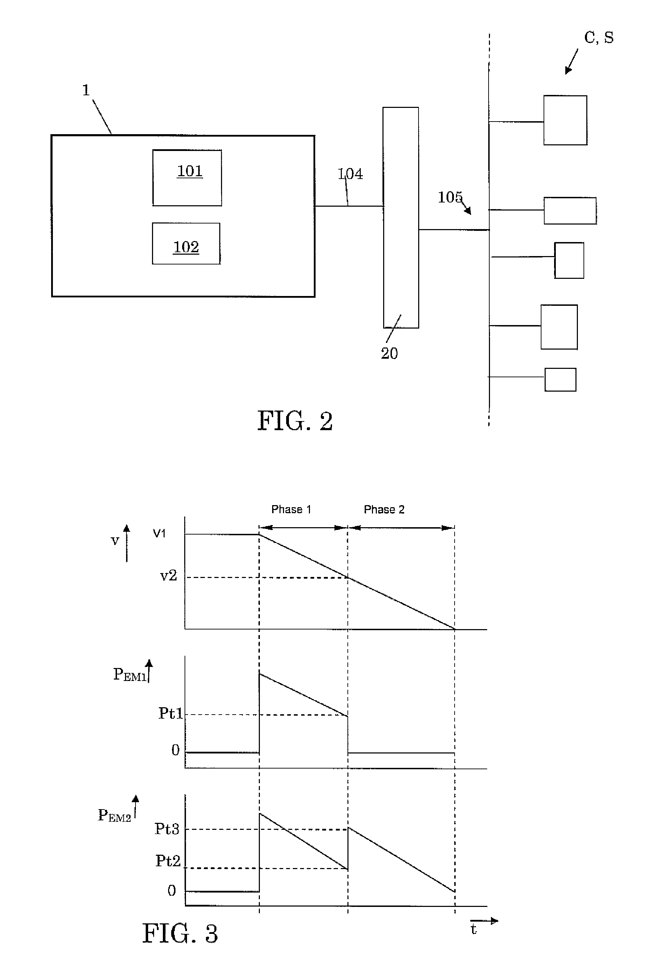

Figure 2 schematically depicts a non-limiting embodiment of a control system comprising a controller 1, configured to control various electric energy consuming and/or generating components C (i.e. accumulator related components) of a hybrid vehicle. As follows from the above, these components can include: one or more electromotors E1, E2, E3, one or more electric power generator systems-for example including the engine M to drive an electric power generator E-, one or more energy regenerators (see above), one or more chargers to charge at least one energy storage system B, the clutch(es) CL, transmission(s) CVT, GB, T2 (,T3), and/or other components.

The controller 1 can be configured to handle power control (i.e. distribution of available electric power), based on certain controller input variables regarding the availability of electric power and the amount(s) of power that is/are needed by certain of the components C.

In the present embodiment, the controller 1 can be connectable to and/or can comprise an interfacing structure (also called the "hardware interface layer") 20 to provide communication between the controller 1 and respective remote vehicle components C. For example, ccommunication may be single sided (REQ) or handshaked (REQ/ACK), or be of a different format. In the present embodiment, there is provided a first communication system 105 that communicatively interconnects the components C and the interface structure, for example via wired and/or wireless communication means, a vehicle data communication network or in an other manner as will be appreciated by the skilled person. Also, in the present embodiment, there can be provided a communication path 104 that communicatively interconnects the interface structure 20 and controller 1, to allow data communication therebetween. Alternatively, the interface 20 can be integral part of the controller 1, or there can be provided a plurality of suitable data interfaces to allow communication between the controller 1 and remote vehicle components C.

Communication between controller 1 and vehicle components C can include transmission of control information from the controller 1 to respective vehicle components, to control (for example activate, deactivate and/or change operation of) those components C. Also, the communication can include transmission of vehicle power status information to the controller 1. The mentioned status information can include various power related variables, for example the variables: a state of charge, vehicle drive power, brake regenerator power, retarder regenerator power, and/or other power related variables. These variables can be dependent on driver related actions, driving conditions, driving as such, as will be appreciated by the skilled person. For example, vehicle power status information can be generated by respective vehicle components C, sensors S, a vehicle speed controller (not shown) configured to request that the powertrain provides a certain amount of drive power to attain or maintain a certain vehicle speed, and/or other vehicle parts or systems.

For example, the interfacing structure 20 is configured to receive power status information (for example from the respective vehicle parts) and to transmit received status information to the controller 1, particularly in a format that can be read by the controller 1. For example, the interfacing structure 20 is preferably configured to translate vehicle status information into specific input variables to be received by the controller 1.

In an embodiment, the mentioned power status information can include various types of information. For example, in the present embodiment, the vehicle can be configured to generate vehicle power status information, regarding status of components C (the status particularly comprising electric power related information with respect to the component C). For example, one or more of these components C can be configured to generate electric power related status information, for example information including an amount of electric power that is required or requested by the respective component C during operation, depending for example on the state and operation of the vehicle.

Besides, as mentioned above, there can be provided one or more sensors S to determine power status of various components, for example to determine a state of charge (SOC) of the energy storage system B. For example, one or more of these sensors S can be part of the respective vehicle components C, or be part of dedicated vehicle control systems (for example a vehicle speed controller). For example, a sensor S can be part or a local component-controller, wherein the local controller can process a sensor signal and transmit a processed sensor signal, or sensor signal related information, to the hybrid controller 1. Each sensor S can also be configured to generate power related status information regarding the parameter(s) measured or assessed by that sensor S.

For example, a state of charge sensor S can provide information regarding the energy storage system's B state or charge, and can preferably generate information including a request for the system B to be charged in the case the sensor S detects or determines that the state of charge has reached a relatively low level, or is expected to reach such low level within a short amount of time.

In a further embodiment, for example, there can be two levels: a first level (for example in a local energy storage system controller), wherein a charge controlling function is available which determines if charging is desired and wherein a warning message, for example "load now or else the energy storage system B might be damaged" can be generated. A second level can be a safety function, which may be part of the hardware interface layer 20.

Besides, the energy storage system's state of charge sensor S can provide information that the energy storage system B does not have to be charged in the case the sensor S detects or determines that the energy storage system's state of charge has reached a relatively high charging level. Besides, a vehicle speed sensor can be available, for example as part of a vehicle control unit, to provide information regarding the actual vehicle speed.

The controller 1 can be configured in various ways. Preferably, the controller 1 is a provided with machine readable instructions, particularly a set of digital code or control algorithm, configured to cause the controller 1 to carry out a method as will be described below when executed by the controller. The controller 1 can comprise suitable hardware, for example one or more processors 101 to execute the instructions, a data memory 102 that can be accessed by the one or more processors 101, for example to hold at least part of the instructions and/or instruction-related variables, as will be appreciated by the skilled person.

### Energy regeneration

According to a preferred embodiment, there is provided an energy regeneration system 1, E1, E2 for a drive system, for example a drive system of a transport apparatus. In the following, the energy regeneration system 1, E1, E2 will be described referring to the embodiments of Figures 1-2. For example, as a non-limiting example, the drive system can be an above-described hybrid drive system, comprising the hybrid powertrain including the engine M (to drive a driven axle 5), the first electromotor E1 (for example an engine starting motor) and the second electromotor E2 (for example to drive the driven axle 5 by itself or together with the engine M), and for example including the control system comprising the controller 1.

Preferably, a coupling system (for example the clutch CL) to couple and decouple at least one electromotors (in the present embodiments: the first electromotor E1 as well as the engine M) to/from the driven axle 5, is part of the energy regeneration system (or, can at least be controlled by the control system).

Preferably, also, a respective controllable main transmission system GB, CVT of the drive system can be part of the energy regeneration system (or, can at least be controlled by the control system).

For example, the energy regeneration system can be part of an assembly comprising the drive system, for example to drive a transport apparatus, for example a vehicle. In that case, the assembly can include at least one above-mentioned electric accumulator B to store the electric energy.

For example, the energy regeneration system can comprise at least a first E1 and a second E2 energy regenerator (see Figures 1B-1E), wherein each of these energy regenerators E1, E2 is configured to convert kinetic energy associated with rotation of the driven axle 5 into potential energy, for example electrical or chemical energy, to decelerate the driven axle 5. Then, preferably, the system comprises a regenerator controller 1 configured to control operation of the at least first and second energy regenerator E1, E2 independently from each other. For example, in the following embodiments, independent control at least includes: controlling (adjusting, setting) the mentioned coupling system CL, and preferably also controlling (adjusting, setting) the main transmission system GB, CVT.

According to a non-limiting example, the energy regenerator controller is or is part of the above-mentioned control system. In the following, this regenerator controller is at least part of (or is) the above-mentioned controller 1.

In the present embodiments, the energy regenerators comprise electromotors E1, E2 configured to convert kinetic energy relating to rotation of the driven axle 5 into electrical energy.

Particularly, in the present embodiment, the first electromotor E1 can be operated in addition to the second electromotor E2, to regenerate energy, for example to charge the energy storage system B. Also, for example during an engine staring phase, the first electromotor E1 can be activated to aid in starting the engine. Besides, for example, the electromotors E1 and E2 can be are connected/connectable to the energy storage system B , optionally via a respective AC/DC converter (for example being part of or associated with a respective electrodrive E1, E2).

Further (see Fig 1A-1F), the second electromotor E2 is configured to drive the driven axle 5 during a non-regeneration mode of the system. For example, to this aim, the second electromotor E2 can be directly coupled to the driven axle 5 (via a suitable transmission T2, as in Fig. 1D), or for example indirectly (see figures 1B, 1C, 1E, 1F).

Also, in the present embodiment, preferably, each electromotor E1, E2 is configured to be powered by a maximum voltage of 100 V, particularly 50 V, during a non-regeneration mode of the system (for example during an eDrive state, or Engine-Startup phase). In that case, for example, an above-mentioned electric storage system B to store the electric energy, is preferably a battery having maximum battery terminal voltage of 100 V, preferably 50 V. Also, for example, each regenerator E1, E2 can be an electromotor having a maximum electromotor power rating of 25 kW, for example a power rating in the range of 3-10 kW.

According to a further embodiment, the regenerator controller 1 can be configured to provide at least a first regeneration mode wherein the first and second regenerator E1, E2 are simultaneously activated (to regenerate energy), and a second regeneration mode wherein the first regenerator E1 is deactivated (i.e., does not regenerate energy) and the second regenerator E2 is activated.

In the present embodiment, preferably, the regenerator controller 1 is configured to provide at least a first regeneration mode wherein the first and second regenerator E1, E2 generate energy according to a first ratio, and a second regeneration mode wherein the first and second regenerator E1, E2 generate energy according to a second ratio, the first ratio being different from the second ratio.

Also, for example (as is mentioned above), the energy regeneration system can be configured such that a loading ratio, which is the ratio of loading the first regenerator with respect to loading the second regenerator, during the first regeneration mode is equal to generator power rating ratio, being the ratio of a power rating of the first regenerator with respect to a power rating of the second regenerator. In a preferred embodiment, said ratio is optimised to minimise losses.

Besides, particularly, the controller 1 can be configured to automatically set the coupling system (clutch CL) in an engaging position during the first regeneration mode, such that the first electromotor/regenerator E1 is operatively coupled to the driven axle 5 (for example via the engine M). The controller 1 can be configured to automatically set the clutch CL to a disengaging position to provide the second regeneration mode, such that the first electromotor/regenerator E1 not operatively coupled to the driven axle 5 (and -in the present embodiment- the engine M is disengaged from the driven axle, as well).

Alternatively, for example, one or more electromotor transmissions T1, T2 as such can be configured to be controlled by the controller 1, to have a respective electromotor E1, E2 engage and disengage an axle or output shaft.

Moreover, in an embodiment, the controller 1 may control the main transmission system GB, CVT to change a transmission ratio when switching between regeneration modes. Besides, the configuration can be such that gear changes may occur at any moment during the regeneration action.

Preferably, the controller can control the transmission system GB, CVT to provide a first amount of loading of the second regenerator during the first regeneration mode, and to provide a second amount of loading of the second regenerator during the second regeneration mode (the second amount of loading being higher than the first amount of loading).

Operation of the present regeneration system can include a method for regenerating energy, the method comprising:
- providing the driven axle 5, for example a driven axle 5 of a transport apparatus;
- providing the first and second electromotor/regenerator E1, E2, each regenerator being configured to cooperate with the driven axle to generate potential energy from kinetic energy, associated with rotation of the axle 5, to decelerate the driven axle 5; and
- controlling operation the first and second regenerator E1, E2 independently from each other.

In this way, a very efficient energy regeneration can be achieved, wherein the overall system can have a relatively low IEP, and can be made relatively lightweight, compact, durable and cheap compared to the known large IEP systems. Also, for example, the present energy regeneration system and method can use low voltages (i.e. below 100 V, particularly below 50 V, for example a 42V system), which is preferred instead of a high voltage system, to reduce costs, and due to safety and technological implications.

According to a further embodiment, during operation, there are provided the different regeneration modes, for example the at least first and second regeneration mode (for example during a mentioned Regen state).

For example, the energy regeneration can involve a regenerative braking (of a respective apparatus, for example a vehicle or a different system). According to an embodiment, regenerative braking can be divided into at least two phases, for example a two machine phase (when both the first and second electromotor E1, E2 are regenerating energy) and a single machine phase (when only one of electromotor E1, E2 is regenerating energy). Efficiency can simply be increased by maintaining a high load factor on both machines E1, E2.

For example, each of the regeneration modes can be when the driven axle 5 is rotating (i.e., has a certain kinetic energy). Then, during the first regeneration mode the first electromotor-regenerator E1 generates a first amount of energy P1 and the second electromotor-regenerator E2 generates a second amount of energy P2. For example (to that aim), the controller 1 controls the system (particularly at least the clutch CL, and optionally for example one or more of the electromotor transmissions T1, T2) to operatively couple the driven axle 5 to each of the two electromotor-regenerators E1, E2. For example, due to the operation of the regenerators E1, E, the driven axle 5 decelerates (for example from a high revolutions-per minute (rpm) value to a rpm value being lower than the high rpm value).

Also, for example, during a second regeneration mode, the first regenerator E1 can generates a third amount P3 of energy and the second regenerator E2 can generate a fourth amount of energy P4, wherein a ratio R1 between the first and second energy amounts P1:P2 differs from a ratio R2 between the third and fourth energy amounts P3:P4.

According to yet a further embodiment, the ratio between the first and second energy amounts P1:P2 (relating to energy regeneration during the first regeneration phase) is about 1. This can be achieved, for example, by providing regenerators E1, E2 each having about the same configuration (having substantially the same power rating). For example, the electromotor-regenerators E1, E2 can be the same type of electromotor. Also, for example, during the first regeneration phase, the electromotor-regenerators E1, E2 can be coupled to the same rotating axle 3, or to different interconnected rotating axes 2, 3 having equal instantaneous rotation speeds.

According to a further embodiment, also, the ratio between the third and fourth energy amounts P3:P4 is smaller than 1, for example 0.

For example, when P3:P4 equals zero, the first regenerator E1 is not regenerating energy, and only the second regenerator E2 is controlled to provide the energy regeneration (and to retard the driven axle 5). To that aim, for example, the controller 1 controls the system (particularly at least the clutch CL, and/or optionally for example one or more of the electromotor transmissions T1, T2) to operatively couple the driven axle 5 the second electromotor-regenerator E2 only, and not to the other (i.e. first electromotor-regenerator E1 and engine M are disengaged).

Figure 3 shows a time diagram of an example of the operation of the system. In this drawing, P_{EM1} is the power generated by the first electromotor/regenerator E1, P_{EM2} is the power generated by the second electromotor/regenerator E2, and v the speed of the driven axle (for example in rmp). As follows from the figure, due to the energy regeneration, the speed of the driven axle will drop from a high value to a lower value. During the process, also, a total amount of instantaneously regenerated energy (P_{EM1}+P_{EM2}) will drop.

As follows from Fig. 3, before energy regeneration, the speed of the driven axle can be relatively high, for example v1. Then (i.e., from the start of a Regen State), during a first regeneration period ("Phase 1"), both the first and second regenerator E1, E2 are used to regenerate energy, leading to deceleration of the driven axle. Preferably, the first and second regenerator E1, E2 are being equally loaded during this first phase, and generate the same amount of power (P_{EM1} = P_{EM2}), instantaneously, during the first phase. In this way, the first and second regenerator E1, E2 can efficiently regenerate the energy.

After the first regeneration period, a second regeneration period ("Phase 2") is being applied, wherein the first regenerator E1 does not retard the driven axle anymore. In this example, during the second regeneration period, only the second electromotor/regenerator E2 is operatively coupled (directly or indirectly) to the driven axle.

Preferably, the loading of the second regenerator E2 is increased at the start of the second regeneration mode, particularly such that the increase in load (substantially, and preferably exactly compensates for the loss of regenerative load relating to the decoupling of the first regenerator E1. In this way, the second regenerator E2 can still efficiently regenerate the energy, and a relatively fluent retarding of the driven axle can be obtained.

For example, the first regenerator E1 and second regenerator E2 can generate a first amount of energy Pt1 and second amount of energy Pt2, respectively, at the end of the first regeneration period ("phase 1"). A respective total regenerated energy then equals Ptot= Pt1+ Pt2.

Then, preferably, the regeneration system is being controlled such that the second regenerator E2 will generate a third amount of energy Pt3 at the start of the second regeneration period, the third amount of energy Pt3 being substantially equal to the afore-mentioned total regenerated energy Ptot.

In a preferred embodiment, the change in loading the second regenerator E2 is achieved by simply controlling the machine (for example controlling the vehicle to generate more or less torque). Alternatively, as an example, the change in loading the second regenerator E2 can be achieved by (the controller 1) controlling an adjustable transmission system GB, CVD, which couples the respective regenerator E2 to the driven axle 5, in an appropriate manner. For example, to achieve the change in loading, the transmission system GB, CVD can be controlled to switch gears or a transmission ratio to a higher gear or a higher transmission ratio, respectively, leading to an increase of the loading of the second regenerator E2.

As follows from Fig. 3, particularly, the switching from the first to the second regeneration mode can be carried out when the first regenerator E1 still regenerates a considerable amount of energy P1t (i.e., the amount being significantly larger than 0 Watt, for example at least 50% rated power.

For example, the switching between the first and second regeneration mode can be achieved automatically, by the controller 1, depending on one or more parameters, such as the actual speed of the driven axle 5 (detected by a suitable speed sensor) or a variable that is associated with that speed. In the present embodiment, for example, the regeneration mode can be switched (from the first to the second mode) when a parameter (for example the driven axle speed v) drops below a predetermined threshold value (for example speed v2, in case of the switching being dependent of the driven axle speed v).

Alternatively, for example, the switching between the first and second regeneration mode can be achieved automatically, by the controller 1, depending on an amount of energy that is regenerated by the regeneration system E1, E2 as a whole, or for example by only one of the electromotor-regenerators E1, E2. In one embodiment, for example, the regeneration mode can be switched (from the first to the second mode) when a detected energy regeneration level of the first regenerator E1 drops below a predetermined threshold value Pt1. Also, for example, the regeneration mode can be switched when a detected energy regeneration level of the second regenerator E2 drops below a predetermined threshold value Pt2.

Depending for example on operator handling, the speed of the driven axle can be further decelerated, for example to zero or a different value, during the second regeneration mode.

The thus regenerated electrical energy can be stored in an energy storage system B of the system, for example to be used by the second electromotor/regenerator E2 during a axle drive mode (for example eDrive), and/or by the first electromotor/regenerator E1 to start-up the engine M.

Besides, depending on the state of the system, the controller 1 can determined to skip an afore-mentioned first regeneration mode at the start of a Regen State, for example in the case that a parameter (for example the driven axle speed v) is already below a predetermined threshold value (for example speed v2, in case of the switching being dependent of the driven axle speed v) when regeneration is to be commenced.

In this way, for example in case the system is used in a hybrid system, significant environmental benefits can be achieved, at relatively low cost of implementation. Embodiments of the presently described system can performs at the level of a full hybrid environmentally, at costs that approach that of a mild system, when measured in terms of cost/benefit ratio.

Particularly, embodiments can significantly increase efficiency of hybrid modes, allowing lower power components to be used. Also, embodiments can limit peak voltages (for example to voltages belo 60 V), so that system parts count can be reduced, and relatively cheap technology can be used (for example: electric power switches using MOSFET technology rather than IGBT technology).

Although illustrative embodiments of the present invention have been described in greater detail with reference to the accompanying drawings, it is to be understood that the invention is not limited to these embodiments. Various changes or modifications may be effected by one skilled in the art without departing from the scope or spirit of the invention as defined in the claims.

For example, an embodiment of the invention can provide digital machine readable instructions, particularly software code, for example a computer program, configured to cause a machine to carry out a method according to the invention when executed by the machine, particularly to provide a controller according to the invention. Also, for example, according to an embodiment of the invention there can be provided a data carrier carrying these digital machine readable instructions.

It is to be understood that in the present application, the term "comprising" does not exclude other elements or steps. Also, each of the terms "a" and "an" does not exclude a plurality. Any reference sign(s) in the claims shall not be construed as limiting the scope of the claims. Also, a single controller, processor or other unit may fulfil functions of several means recited in the claims.

For example, a mentioned second regenerator can include a single regenerator (see for example the examples of Figures 1B-1D), or at least two regenerators E2, E3 (see for example the examples of Figures 1E-1F). For example, an optionally further (i.e. the third) energy regenerator E3 can be controllable (by controller 1) independently from the first regenerator E1, as well.

## Claims

1. An energy regeneration system for a drive system, for example a drive system of a transport apparatus, comprising at least a first (E1) and a second (E2) energy regenerator, wherein each energy regenerator (E1, E2) is configured to convert kinetic energy associated with rotation of a driven axle (5) into potential energy, for example electrical or chemical energy, to decelerate the driven axle (5), wherein the system comprises a regenerator controller (1) configured to control operation of the at least first and second energy regenerator independently from each other.

2. The system according to claim 1, wherein the regenerator controller (1) is configured to provide at least a first regeneration mode wherein the first and second regenerator (E1, E2) are simultaneously activated, and a second regeneration mode wherein the first regenerator (E1) is deactivated and the second regenerator (E2) is activated.

3. The system according to claim 1 or 2, wherein the regenerator controller (1) is configured to provide at least a first regeneration mode wherein the first and second regenerator (E1, E2) generate energy according to a first ratio, and a second regeneration mode wherein the first and second regenerator (E1, E2) generate energy according to a second ratio, the first ratio being different from the second ratio.

4. The system according claim 2 or 3, wherein the system is configured such that a loading ratio, which is the ratio of loading the first regenerator with respect to loading the second regenerator, during the first regeneration mode is equal to generator power rating ratio, being the ratio of a power rating of the first regenerator with respect to a power rating of the second regenerator.

5. The system according to any of the preceding claims, wherein at least one of the energy regenerators, and preferably each energy regenerator, comprises an electromotor (E1, E2), configured to convert kinetic energy relating to rotation of the driven axle (5) into electrical energy.

6. The system according to claim 5, wherein the electromotor (E1, E2) is configured to drive the driven axle (5) during a non-regeneration mode of the system.

7. The system according to claim 5 or 6, wherein each electromotor (E1, E2) is configured to be powered by a maximum voltage of 100 V, particularly 50 V, during the non-regeneration mode of the system.

8. The system according to any of the preceding claims, wherein the drive system is a hybrid drive system that includes a first drive (M), for example an engine, and a second drive, for example an electromotor (E1), to drive the driven axle (5), and preferably a controllable coupling system (CL) to operatively couple one and/or both of the drives (M, E2) to the axle (5).

9. An assembly comprising a drive system, for example to drive a transport apparatus, for example a vehicle, wherein the drive system is configured to drive a driven axle (5), wherein the assembly also includes a system according to any of the preceding claims to generate potential energy from kinetic energy that is associated with rotation of the driven axle (5), particularly to decelerate the driven axle (5).

10. The assembly according to claim 9, wherein the potential energy is electric energy, wherein the assembly comprises at least one electric accumulator to store the electric energy, wherein the electric accumulator is a battery having maximum battery terminal voltage of 100 V, preferably 50 V.

11. A method for regenerating energy, comprising:
- providing a driven axle (5), for example a driven axle (5) of a transport apparatus;
- providing at least a first and a second regenerator (E1, E2), each regenerator being configured to cooperate with the driven axle to generate potential energy from kinetic energy, associated with rotation of the axle (5), to decelerate the driven axle (5); and
- controlling operation the first and second regenerator (E1, E2) independently from each other.

12. The method according to claim 11, providing at least a first and second regeneration mode, wherein during the first regeneration mode the first regenerator (E1) generates a first 'amount' of energy P1 and the second regenerator (E2) generates a second amount of energy P2, wherein during the second regeneration mode the first regenerator (E1) generates a third amount P3 of energy and the second regenerator (E2) generates a fourth amount of energy P4, wherein a ratio R1 between the first and second energy amounts (P1:P2) differs from a ratio R2 between the third and fourth energy amounts (P3:P4).

13. The method according to claim 12, wherein the ratio between the first and second energy amounts (P1:P2) is 1.

14. The method according to claim 12 or 13, the ratio between the third and fourth energy amounts (P3:P4) is smaller than 1, for example 0.

15. The method according to any of claims 11-14, including:
- controlling a coupling mechanism (CL) such that the first regenerator (E1) can cooperate with the driven axle (5) to regenerate energy generate potential during a first regeneration mode;
- controlling a transmission system (T2) to provide a first amount of loading of the second regenerator during the first regeneration mode;
- controlling the coupling mechanism (CL) such that the first regenerator (E1) can not cooperate with the driven axle (5) during a second regeneration mode; and
- controlling the transmission system (T2) to provide a second amount of loading of the second regenerator during the second regeneration mode, the second amount of loading being higher than the first amount of loading.
